# EUROPEAN PATENT APPLICATION

(11) **EP 2 091 013 A1**
(43) Date of publication of application: **19.08.2009**
(21) Application number: 06817798.9
(22) Date of filing: 06.11.2006
(51) Int. Cl.: G06Q 30/00

(54) **A BUSINESS TRAVEL SYSTEM BASED ON A NETWORK PLATFORM**

(71) Applicant: Lei, Fanghua, Shanghai 200-032 (CN)
(72) Inventor: Lei, Fanghua, Shanghai 200-032 (CN)
(74) Representative: Schüssler, Andrea
(86) International application number: PCT/CN2006/002971
(87) International publication number: WO 2008/055379

(57) **Abstract**

The invention established a business travel system based on the network platform to the public, making the internal management of travel agency become platform, and providing all-directions services according to different clients and needs. Its technical scheme as following: system including a database, a logging module, a client module by which a user can access the network platform to design and manage business travel scheme, a operator module by which an operator access the network platform to manage and trace the entire process. Wherein the client module further includes the journey basic information input module, everyday schedule input module, order form generating and quoting module and member list adding module. The operator module further includes a service activity adding module, an airline ticket confirming module, a hotel confirming module, a cicerone scheduling module, a local reception scheduling module and the third-time order form generating and quoting module. The invention applies to the area of developing online business travel.

## Description

This application claims priority from PCT/CN/2006/002971 filed November 6, 2006.

### Technology Field

The invention involves in a kind of business travel system and particularly involves a kind of business travel system based on network platform.

### Technology Background

At present, our country's business trip mainly consists of three factors, tour investigation agent (generally is travel agency), tour investigation suppliers (for example hotel, airline..etc.), client (generally is tourist group). Lot of work in travel system are accomplished by person's intensive labor, its features usually has two kinds: one kind is a tour team has already been market-oriented and individual tourist travel, that market is tended to transparent and mainly operated by the method of market competition; Another is a business investigation training hasn't formed market mechanism, the official business investigation training has no mature market, its operation is private or semi-open and the way of operation is basically depend on network, there is no mature and norms operation.

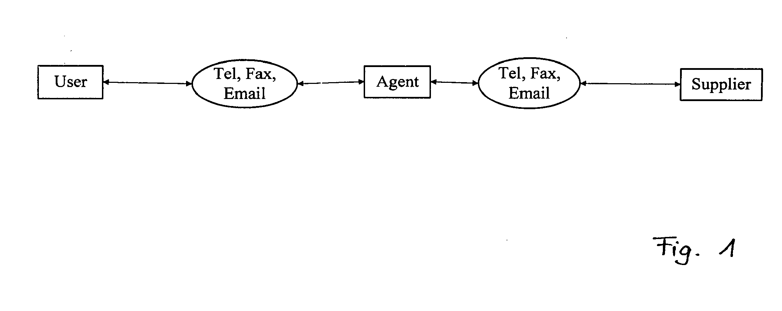

From the operation experience, we can analyze that some operations appeared exist the following problem: a. High cost of marketing means: Main of them is traditional tourism scattered marketing, that is, by the means of medium advertisement publicity such as newspaper, television, magazine etc., but in this way cannot form scale and the cost of management effect is high. b. The way of operation is unconfirmed: As figure 1 shows, client, business agent and supplier contact with each other is mainly through telephone, telegram and fax or email, but the arrangement across space, region and many aspects make long period and high operation expense, easily to produce a uncertain factor cause mistakes. The backward management means and ways, the serious restrict development of our country's business tourism industry in the future.

### Invention Contents

The purpose of the invention lies in working out the problems mentioned above and providing a kind of business travel system based on network platform to make the internal management of travel agency platform. And also can provide all-directions service according to the different clients and different need.

The technical scheme of the invention is: The invention describes a kind of business travel system based on network, providing clients, operators can enter into the network platform from their own connecting entrance and they can design, manage business travel scheme on this network platform, in the meantime, transmitting information from each other. Thereto, the system includes: The database which used to pre-storing data, receiving the data transmitted by each module data and store it;
Logging module, used to receive account and password input. And also judge whether the account and password are legal, if legal, then login this network platform from suitable interface, otherwise forbid landing;
Client module which a user can access the network platform to design and manage a business travel scheme. This client module further includes:
Journey basic information input module, receiving basic journey information that the clients input and delivering to that database for storing;
Daily Arrange module which receives journey basic information input by the journey basic information input module in that database. Providing clients make arrangements to every day's trip within journey basic information restriction scope and storing every day's input journey information into that database;
Order form generating and quoting module includes the first-time order form generating and quoting module and the second-time order form generating and quoting module. The first-time order form generating and quoting module extracts the journey basic information input module from the database, transmitting to the journey basic information in this database and the quotation data which pre-stored in the database, outputting the first time journey basic order and basic quotation provided for clients to check and storing it in the database. The second-time order form generating and quoting module extracts the input module daily arranged from the database transmits to the input information data daily route arranged, per-stored quotation data from the database and the first-time's journey basic order and basic quotation generated by the first-time's order form generating and quoting module, generating the second-time's journey basic order and basic quotation.

Member list adding module receives the information of group members input by clients and storing in the database.

Operator module which an operator can access the network platform from logging module to manage and follow the entire process of the scheme business tour project. Operator module is further includes:
Service activity adding module which receives service information input by operator and store it into database.
An airline ticket confirming module which receives the reservation of tickets and ticket information to store into the database;
A hotel confirming module, receiving the reservation of hotel information and store into the database;
A cicerone scheduling module, receiving suitable guider's information and store into that database;
A Local reception scheduling module, receiving suitable agent information and store into the database;

The third-time order form generating and quoting module which is used to extract the stored service activity detailed information of service activity adding module, ticket information of airline ticket confirming module, hotel reservation information of the hotel confirming module, guider information of the cicerone scheduling module, tour reception information of the local reception scheduling module from the database. And those information insert into the basic order and basic quotation generated by the second-time order form generating and quoting module.

The business travel system based on network platform mentioned above, thereto, the journey basic information input by the clients of the journey basic information input module includes: visit date, visit nation, visit people number, visit days, set out place, hotel request, meal fee standard, traffic request, whether need approve the journey, whether need journey visa, visit information, visit unit, times of invitation, times of service activity and the group number generated automatically.

The business travel system based on network platform mentioned above, among them, the operator module including daily arrangement module. This module receives the journey days, country, city and travel spots information provided by users and shows the received information by the form of options on the interface automatically for operator to make choice.

The business travel system based on network platform mentioned above, thereto, everyday scheduling information input by clients in everyday scheduling module includes: daily country arrangement, city selected from the country, scene selected from the city, daily visit purpose and training need, daily arranged country limited in the range of visit country in the journey basic information that input by clients.

The business travel system based on network platform mentioned above, thereto, the generated information of the first-time order form generating and quoting module includes journey basic information, service activity information and quotation information. Journey basic information includes the journey name, journey number the same as the group number, visit nation, visit people number, visit time, visit days, set out place, traffic requirement, hotel requirement, meal fee standard and journey state. The service activity formation includes visit information, visit industry, visit topic, visit unit, times of invitation, times of business activity, confirm whether need to approve the route, confirm whether need the visa route. The quotation information includes the hotel fee, meal standard, guided vehicles fee, foreign comprehensive insurance, official business fee and invitation fee. The second-time order form generating and quoting module includes all the information generated from the first-time g order form generating and quoting module, everyday scheduling information added in the service activity information, visit travel spot and total price of reference. Everyday scheduling information includes date, city and tourist spot's name daily arranged.

The business travel system based on network platform mentioned above, thereto, client module also includes:
Client registration module which receives new registration information of clients, entering into the network platform from the logging module after examining to be a legal client;
Client modification module which receives modification from the journey basic information of the journey basic information input module from client and everyday scheduling information of everyday scheduling input module when the generated order from order form generating and quoting module under unchecked, then store the modified data into database.

The business travel system based on network platform mentioned above, thereto, the concrete information of service activity received by service activity adding module includes nation, city, daily date, lord speaker's information, contact person's information, Whether need invitation letter, data and concrete arrangement.

The business travel system based on network platform mentioned above, thereto, the airline ticket confirming module further includes:
Ticket reservation inquiry module which receives several ticket schemes input from operators, after sending it out to airlines, then feedback the price information;
Ticket manage module which receives one of the schemes that chosen by operator and stores it into database.

The business travel system based on network platform mentioned above, thereto, the hotel confirming module further includes:
Hotel inquiry module, receiving number of hotel rooms input by operator and sending to each hotel to inquire about price information, then storing into the database;
Hotel manage module, receiving hotel selected by operator, adding hotel name and its feedback number to that database.

The business travel system based on network platform mentioned above, thereto, cicerone scheduling module further includes:
Cicerone viewing module which receives daily budget price information input by operator;
Cicerone distributing module which receives region information input by operator, extracting cicerone's list from the database, selecting suitable list of cicerone according to the region's information and daily budget price information and inquiring about price with the cicerone on that list;
Cicerone confirming module which receive all the information feedback and chosen cicerone information from operator, then store both into the database.

The business travel system based on network platform mentioned above, thereto, the local reception scheduling module further includes:
Local reception viewing module which receives daily budget price information that input by operator.

Local reception distributing module which receives the region information input by operation, extracting local reception list from that database, selecting suitable local reception list according to the region's information and daily budget price information and connect with the local reception on the list to inquire about price; Local reception confirming module which receives all the feedback information from the local reception, modifying range of the local reception, adding and modifying journey travel spots, receiving the local reception information chosen by operator and storing into the database.

The business travel system based on network platform mentioned above, thereto, the operator module further includes:
Work diary filling module which receives journey work diary recorded by operator; Journey approval generating module which receives data input by operator to generate approval journey;
Visa trip generated module which receives data input by operator to generate visa trip.

The business travel system based on network platform mentioned above, thereto, the system still includes cicerone module which is used to the consultation between cicerone and operator, cicerone module further includes:
Cicerone order and group inquiry module which is used to inquire the cicerone's order information and group information from the database;
Opinion feedback module which receives feedback opinion information input by cicerone and store it into the database;
Cicerone guestbook module which receives system's information and local reception's message, receiving the best route provided by the cicerones all over the world, consulting with operator through the guide cicerone scheduling module in the operator module.

The business travel system based on network platform mentioned above, thereto, the system still includes local reception module which is used to the consultation between tour reception and operator. The local reception further includes:
Local reception order and group inquiry module, used to inquire about the order and group information of the local reception from the database.
Hotel information inquiry and modification module, used to inquire about the hotel information from the database, modifying hotel information and storing it to the database for updating;
Local reception guestbook module receives system's information and cicerone's messages, consulting with operator through the local reception scheduling module in operator module.

The business travel system based on network platform mentioned above, thereto, the system still includes distribution monitoring module, it further includes:
Group order distributing module, the super administrator set up by system will assign the group order storing in the database to different ordinary administrator set up by system;
Task assignment module, ordinary administrator will assign the receiving group order's tasks to different operator set up by system, then operator can operate group through operator module.

Monitoring module, storing the operator's operation records, providing super administrator control all the group documents under way or have already completed.

The invention compare with existing technique has following beneficial effect :The business travel system of this invention makes the internal management become platform, all the operations and requirements of the clients, reception and business operators is supervised by system administrator in order to find and solve problems in time. In the meantime, through the system, traditional business investigation and travel can organic combine together. This system can provide all-directions service according to the different clients and requirements.

### Attach diagram indicated

Figure 1 is the existing business travel's diagrammatic sketch.
Figure 2 is system's general frame diagram of the invention.
Figure 3 is the frame diagram of better implementation example from client module of the invention.
Figure 4 is the frame diagram of better implementation example from operator module of the invention.
Figure 5 is the frame diagram of better implementation example from cicerone module of the invention.
Figure 6 is the frame diagram of better implementation example from local reception module of the invention.
Figure 7 is the frame diagram of better implementation example from distribution monitoring module of the invention.
Figure 8 is the flow chart for the operating of business travel system of the invention.

### The best implementation scheme of the invention

The following combine attach diagram with implementation example to make a further description to the invention.

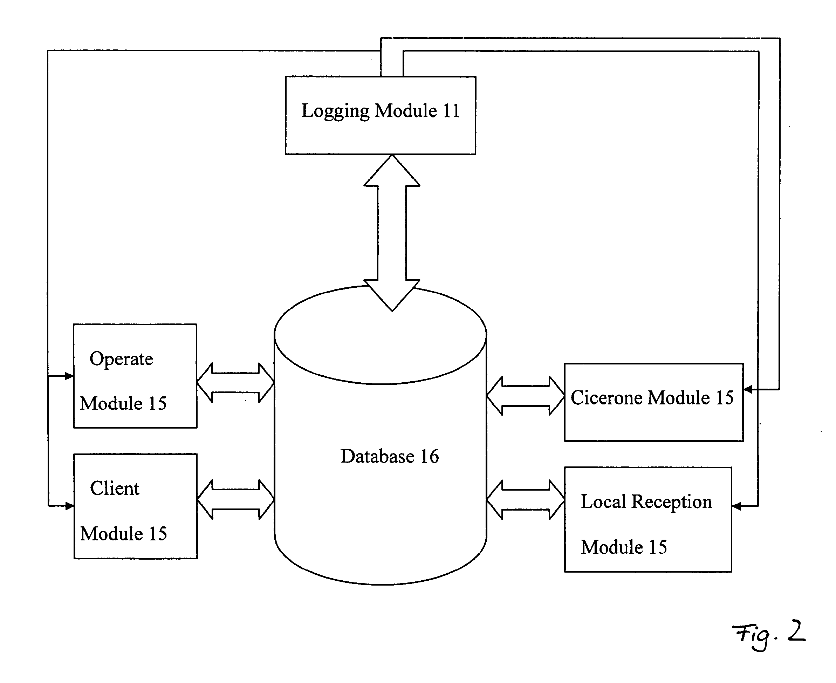

Figure 2 shows the system's general frame of the invention. As figure 2 shows, the business travel system 10 of the invention includes logging module 11, operator module 12, client module 13, cicerone module 14, local reception module 15 and database 16. The user input marking ID, password and choose what identity (client, operator, cicerone or local reception) entry system by logging module 11. Logging module 11 receives the above-mentioned data and compare with the stored logging client list in database 16. Logging client list stores all the registered client's information in system 10, that is, all the clients, operators, cicerones resisted in the system have a reflecting relation with marking ID and password.

After comparing, if ID and password which the user input is the same as the logging client list, then system 10 allows user enter into its own module through the corresponding connect entrance. If user logs as a client, then the system will turn into client module13 automatically, if user logs as an operator, then the system will turn into operator module 12 automatically, if user logs as a cicerone, then the system will turn into cicerone module 14 automatically, if user logs as local reception, then the system will turn into local reception 15 automatically.

These modules all need to exchange dates with database 16 while they are operating.

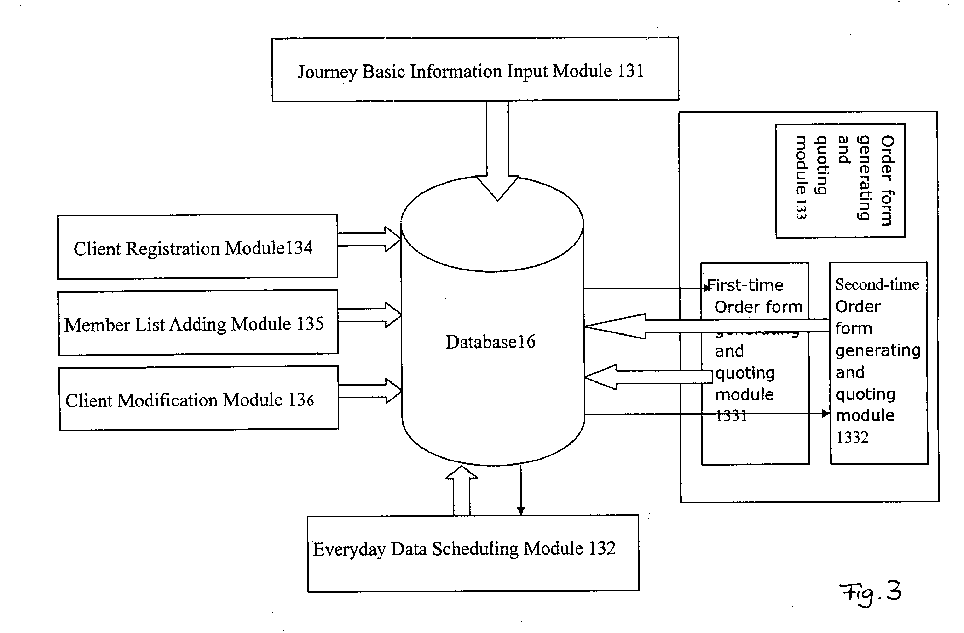

Figure 3 shows a better implementation example function frame of client module.

As figure 3 shows, client module 13 includes journey basic information input module 131, everyday scheduling input module 132, order form generating and quoting module 133, client register module134, member list adding module 135, client modify module136.

Thereto, journey basic information input module 131 receives the journey basic information that the clients input and delivers it to the database 16 for storing, these journey basic information includes visit date, visit nation, visit people number, visit days, set out place, hotel request meal standard, traffic requirement, whether need to approve the trip, whether need visa route, visit information, visit unit, times of invitation letter, times of business activity and generated group number automatically etc.. In this implementation example, the hotel request can settle by the hotel star class, the meal fee standard can choose between the common standard as six vegetable, one soup and the luxurious standard as eight vegetables, one soup. Visiting information can choose among education, economy industry, building industry, manufacturing industry, mineral industry, real estate industry...etc. of selection, visiting unit can choose among government department, industry association and enterprise unit and education research organization. Invitation letters are used in the visa time, its number usually the same as the visit nation's number. Usually the leaders of the concerning department from Government organization, enterprises unit's business must approve the investigation route and sign the name to agree the mission documents of training investigation countersign abroad, so in this case, approval route can be designed according to the director department's special request to the arrangement of travel route. Visa route is needed to apply visa, it must be formulated to get the related nation's visa. Generally speaking, the contents of the visa route need to enclose with the purpose of visiting place, contact person and accommodation address etc. in detail, moreover, travel route of must have Chinese and English two editions. If the client has concrete visiting request, it can also input into database 16 by this module mold.

Everyday scheduling input module 132, receiving the journey basic information input from journey basic information input module 131, providing clients to make everyday scheduling in the limited scope of the journey basic information, storing input information of everyday scheduling into database 16. Those everyday scheduling includes daily arranged nation, cities chosen from the nation, travel spots chosen from the city, the purpose of daily visiting and requirement of training, and the daily arranged nation is limited in the visiting countries which the client's input in the journey basic information. In the meanwhile, module 132 read the chart which is set up by the nation, the city of this nation, travel spots of this city etc. from database 16, after the clients choose the counties, module 132 will show the city name related countries on the interface for the client to make choice. Similarly, after client choose the cities, module 132 will show the travel spots name related cities on the interface for the client to make choice automatically. Of course, module 132 also can receive cities and sceneries input by clients and store it into database 16. This module 132, providing investigation, sight-seeing trip, visiting, meeting and the visit purpose of transferring stations for the clients to make choice, receiving the concrete visiting requirement input by clients.

The client can also arrange the concrete arrangement to the daily trip not through the everyday scheduling input module 132, on the basic of input traveling days and country in the journey basic information module 131, adding the following information: go to which cities of these country, which travel spots of these cities and so on, but make no detailed daily arrangement to these information. There's a everyday scheduling module inside of the operator module 12. This module receives above information as trip days, country, city, travel spots and so on and shows above information on the page in the form of option for clients to make choice. For example, when the operator arrange the daily journey, the system will first extract all the country names which received by everyday scheduling module and show them in the form of option on the page for operator to make choice.

After the operator chooses a country, all city names related country will be withdrew from the chart of nation - city connection of database and show them in the form of option on the page for operator to make choice. Similarly, after the operator chooses a city, all travel spots names related city will be withdrew from the chart of city-travel spots of database and show them on the page in the form of option for the operator to make choice. Thus, the operator only needs to make simple choice on the information page which is provided by client, and then he is able to complete the arrangement of daily trip.

The order form generating and quoting module 133 includes the first-time order form generating and quoting module 1331 and the second-time order form generating and quoting module 1332. Thereto, the first-time order form generating and quoting module 1331 extracts the journey basic information input module 131, transmitting to the journey basic information data in database 16 and pre-storing quotation data in database, outputting the first-time journey basic order and the basic quotation for the client to check and storing into database 16. First-time order form generating and quoting module 1331's generated information includes journey basic information, service activities information and quotation information, thereto, the journey basic information includes the trip name, trip number the same as the group serial number, visit country, visit visitor number, visit time, visit days, set out place, traffic request, hotel request, meal fee standard and the state of trip (e.g. has unchecked, under operating and succeed three conditions), service activities information includes visit information, visit unit, times of invitation, times of business activities, whether needs to approve the trip confirm information, whether needs to get visa trip confirm information, quotation information includes the hotel price, meal fee standard, guide fare, overseas general insurance, official business activity fee, invitation letter fee. The first-time order form generating and quoting module 1331 runs after the journey basic information input module 131 received which the client input and store it in database 16. In this module 1331 generated orders, journey basic information and service activities information are the same as the journey basic information input module 131. The quotation information is combine the per-stored quotation chart in the database 16 and the journey basic information, for example, the hotel price is decided on the star-level which input by client and price related star-level in the quotation chart.

The second-time order form generating and quoting module 1332 extracts daily arrangement input module 132, transmitting everyday scheduling information data in database 16, pre-storing the quotation data in database 16 and the first-time journey basic order, basic quotation which are generated by the first-time journey basic order and quotation module 1331 to generate the second-time journey basic order and basic quotation price. The second order form generating and quoting module 1332's generated information includes all information of the first order form generating and quoting module, everyday scheduling adding information in the service activities information, the visit travel spots fee and the reference total price in the quotation information. Everyday scheduling information includes date, city and travel spots names in everyday scheduling. Member list adding module 135 receives the group member information input by client and stores it into database 16. This module 1332 runs after everyday scheduling input module received client's daily arrangement information and store it into database, the generated basic order and quotation information of this module not only has the all data of first-time order form generating and quoting module 1331, but also adds the everyday scheduling information received by everyday scheduling input module 132 in service activities information, added travel spots fees and reference total price in quotation.

The client registration module 134 receives the new client's registration information; after verifying is a legal client may through the login module 11 to enter into the network platform. Client modification module 136 receives client's modification to the journey basic information of journey basic information module 131 and everyday scheduling of everyday scheduling module 132 when generated order of generation and the quotation module 133 is under unchecked, storing the modification into database 16.The order form generating and quoting module 133 generates new order and quotation from the modified data.

Client module 13 can also includes trip inquiry module, it extracts trip related data from database 16 and can inquire about all trip conditions (including unchecked, under operating, succeed).

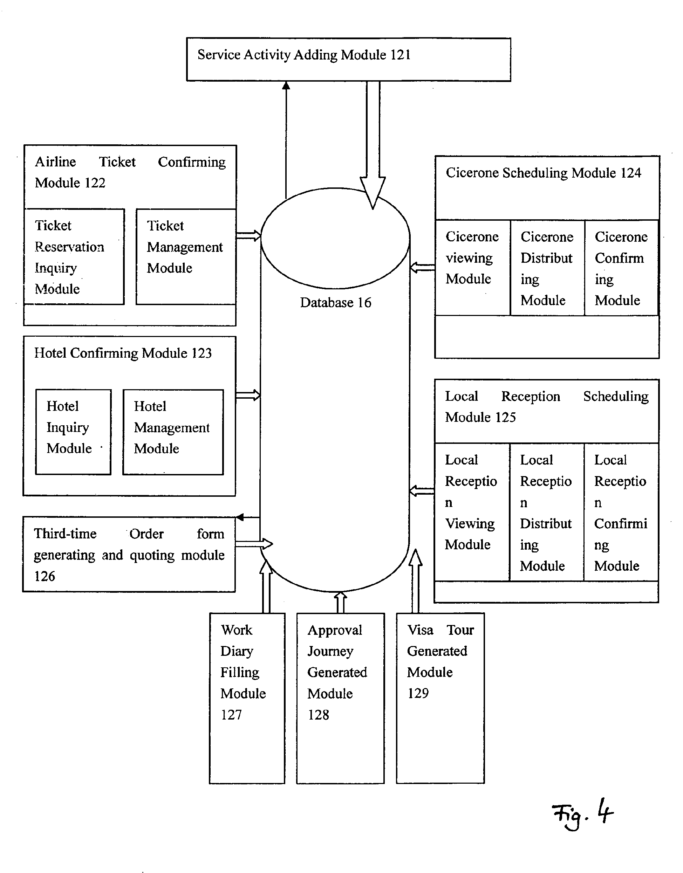

Figure 4 shows a better implementation example function frame of operator module 121. As shown in Figure 4, operator module 12 includes service activities adding module 121, airline ticket confirming module 122, hotel confirming module 123, cicerone scheduling module 124, local reception module 125, the third-time order form generating and quoting module 126, work diary filling module 127, journey approval generation module 128 as well as visa route generation module 129.

Thereto, service activities adding module 121 receives concrete information of service activities which is input by the operator and store it into database 16.

Service activities information includes daily country, city, date, speaker information, contact person information, whether need invitation letter, documents and concrete arrangement and so on.

Airline ticket confirming module 122 includes flight ticket reservation inquiry module 1221 and flight ticket management module 1222, thereto, the flight ticket reservation inquiry module 1221 receives the several set of flight ticket scheme designed by operator according to trip information, after transmit to airline company ask for the price, then feedback the price information. Flight ticket management module 1222 receives one of the schemes that selected by the operator, and then store it into database 16.

Hotel confirming module 123 includes hotel inquiry module 1231 and hotel management module 1232, thereto, the hotel inquiry module 1231 firstly read daily arranged cities and city-hotel relation table from database 16, getting hotels of the city from daily arranged city, sending the room number of the hotel which operator set up according to the visit person number to these hotel ask for the prices and storing the price information into database 16. The hotel management module 1232 receives the hotel which selected by the operator, adding the hotel name and the feedback number into database16.

The local cicerone scheduling module 124 includes cicerone viewing module 1241, cicerone distributing module 1242 and cicerone confirming module 1243. Thereto, cicerone viewing module receives budget price information input by operator every day which includes tickets, traffic fees, meal fees, guide small fees. Cicerone distributing module receives area information input by operator and extracts a list of tour cicerone from the database 16, then selects the suitable cicerones according to input the area information and everyday budget price information, last make an inquiry to the tour cicerones on the list. Cicerone confirming module receives feedback information from all tour cicerones on and receives the selected tour cicerone information by operation, then stores them into the database 16.

Local reception scheduling Module 125 of includes local reception viewing module 1251, local reception distributing module 1252 and local reception confirming module 1253. Thereto, local reception viewing module receives budget price information input by operator every day which includes tickets, traffic fees, meal fees, guide small fees. Local reception distributing module receives area information input by operator and extracts a list of local receptions from the database 16, then selects the suitable receptions according to input the area information and everyday budget price information, last make an inquiry to the local receptions on the list. Local reception confirming module receives feedback information from all local receptions on the list, and receives the selected local receptions information by operator and stores them into the database 16, meanwhile, the local reception confirming module could modify the scope of the local reception, add and modify travel spots route.

The third-time order form generating and quoting module 126 could extract service activity information stored by service activity adding module 121 from the database 16, ticket information from the airline ticket confirming module 122, the hotel reservation information from the hotel confirming module 123, cicerone information from the cicerone scheduling module 124, reception information from the local reception scheduling module 125, and will insert the above referred information into the basic order and the basic quotation generated by the module 1332 of the second-time order form generating and quoting. The order and quotation generated by the module 126 is as the final itinerary order and quotation, what's more, the module 126 can generate one trip manual which could be downloaded for clients.

The operator module 12 includes work diary filling module 127, approval trip generation module 128 and visa trip generation module 129. Thereto, the work diary filling module receives from operator the work daily record for the route of travel, and approval journey generation module receives the data input by operator and generates approval trip, visa trip module receives the data input by operator and generates a visa trip. Besides, the operator Module 12 still includes the cost accounting mold, which is used to record actual expense, and compare with end quotation to be convenient for financial analysis and accounts.

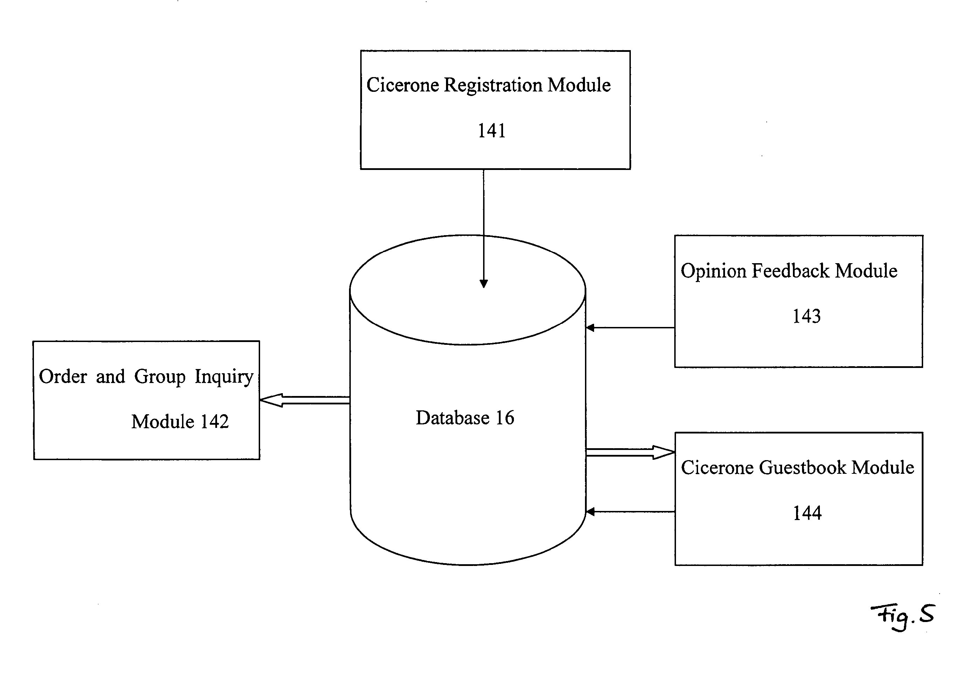

Figure 5 shows the better implementation function frame of cicerone module 14. As figure 5 shows, cicerone module 14 includes cicerone registration module 141, order and group inquiry module 142, opinion feedback module 143 and cicerone guestbook module 144. Thereto, cicerone registration module receives register information such as the name, sex and the region, age, and nation etc. input by cicerone and stores them into database 16, and then assigns one serial number for each cicerone. Order and group inquiry module is used to inquire about the order information and group information. Opinion feedback module receives and stores into the database 16 the opinion feedback that the cicerone inputs, which includes a route of travel, route serial number, set out date, visitor number and comment etc. The cicerone guestbook module receives system information, local reception message, and the best trip provided by the global cicerones. Meanwhile, consults with the operator under the support of the cicerone scheduling module 124.

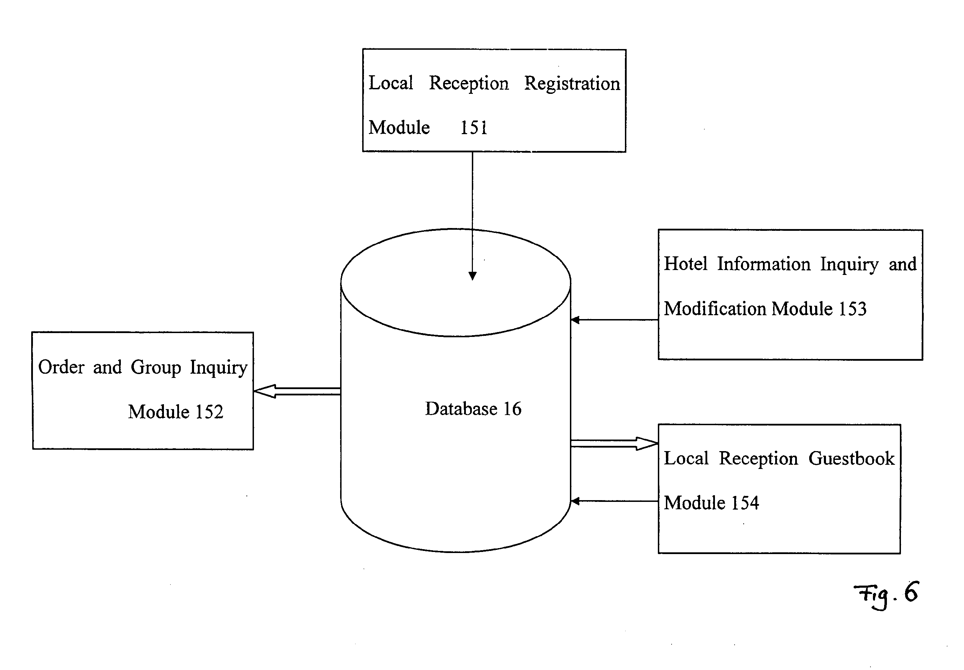

Figure 6 shows the better implementation function frame of the local reception module 15. The local reception module 15 includes local reception registration module 151, order and group inquire module 152, hotel information inquiry and modification module 153 and local reception guestbook module 154. Thereto, local reception registration module receives register information input by guide and stores them into database 16, and then assigns one serial number for each local reception. Order and group module is used to inquire local reception's order information and group information. The hotel information inquiry and modification module153 is used to inquire the hotel information and modify them, then renew them in the database 16. The local reception guestbook module 154 receives system information and tour cicerone's message, and consults with the operator under the support of the local reception scheduling module 125.

The system can also establish one super administrator to add, modify, delete, and monitor all data of the system and the clients.

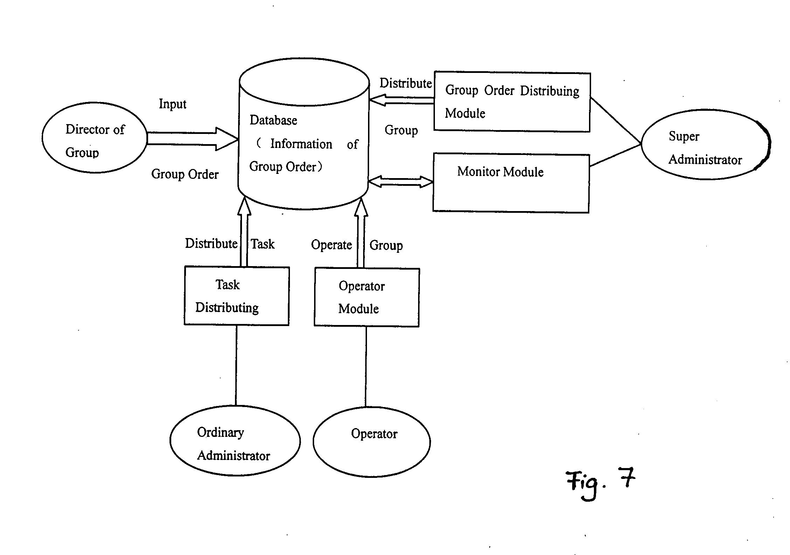

Figure 7 shows another module----distributing monitor module. This module includes group order distributing module, monitor module and task assignment module. Firstly the group representative director creates one order in the system, and stores it in the database. Then, the super administrator assigns all the orders to common managers based on the group order assignment module. Thirdly the ordinary administrator will get the assigned each task of order and operate the order through operator module. Besides, the operating process of operator is recorded and stored into the database, based on which super administrator could track all the information about the group trip through the monitor module.

As for the distributing monitor module, it could not only raise the operator efficiency, regulate process, prevent from the important mistake among the arrangement, but also it is more easily to acquire the concrete information of all the trip process, for example, you could search who booked the air ticket about group of Shanghai November 2005.

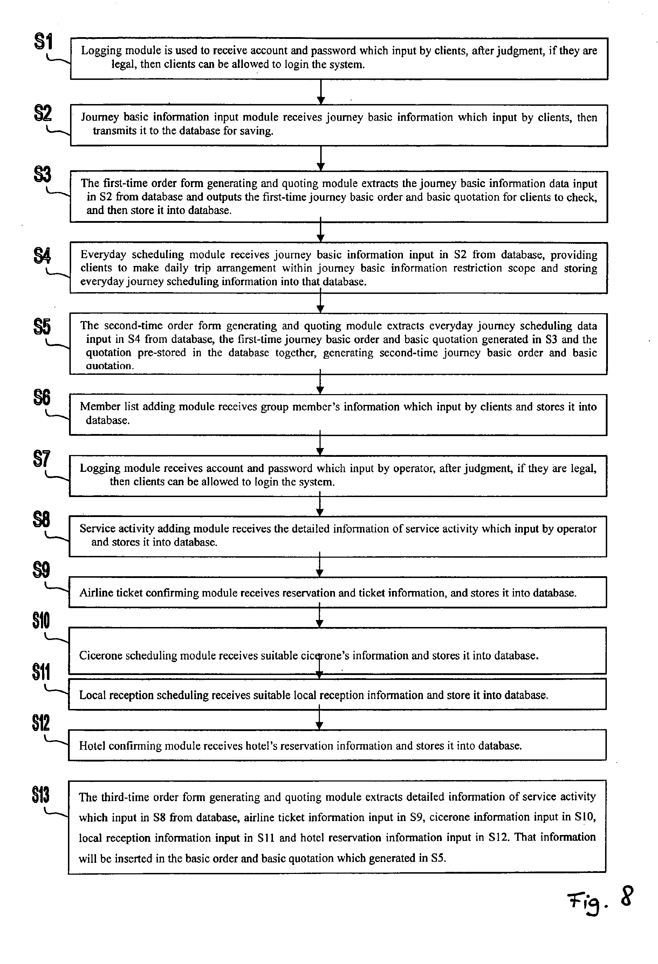

Figure 8 shows a better implementation example as the operational process of the business tour system. It is detailed described each step of process as below.

S1: Logging module receives marking number and password of the client, and allows client to register the system after judging the marking's number and password is legal.

S2: The journey basic information importation module receives the journey basic information that the client inputs and delivers and stores them in the database. The basic information includes: visit date, visit nation, visitor number, hotel requirement, meal fee standard, traffic requirement etc.

S3: Extracting the journey basic information from the step S2, the first-time order form generating and quoting module outputs the first-time basic trip and basic quotation which offers client to check. The output information includes the trip basic information, service activity information and quotation information. Thereto, the journey basic information includes visit nation, visitor number, traffic requirement, hotel requirement, meal fee standard etc. The service activity information includes visiting information, visit unit, invite letter number etc. The quotation information includes the hotel price, meal fee, fare guide, foreign comprehensive insurance, official service activity expenses, invite letter expenses etc.

S4: The everyday scheduling input module receives the basic travel information input in S2 in the database, for clients everyday scheduling within the limit of the journey basic information; the inputting information of the everyday scheduling will be stored into the database. The everyday scheduling information input by clients received in the everyday scheduling input module includes daily arrangement countries, selected city from the countries, selected attractions from the cities, daily visiting purpose and training needs, the daily arrangement countries within the limit of visiting countries of the journey basic information in the S2.

S5: The second-time order form generating and quoting module extracts information data of the everyday scheduling input in the S4, the first trip basic order and basic quotation generated in the S3, pre-stored quotation data in the database from data to generate the second basic and fundamental quotation. For example, the second trip at the journey basic order and quotation. For example, the second journey basic order and quotation adds country, city, attractions arrangements of daily trip on the basis of the first journey basic order and basic quotation and attraction quotation and total reference price related to the daily travel.

S6: Member list adding module receives the information of the group members input by client and stores into the database.

S7: Logging module receives identification number and password input by operators, permits the operators to log in the system after judging the legitimacy of the identification number and password.

S8: Service activity adding module receives the concrete information of the service activities input by operators and stores into the database. The concrete information of these service activities includes daily's country, city, date, speaker information, contact information, whether need invitation letters, documents and concrete arrangements etc..

S9: Airline ticket confirming module receives ticket reservation and ticket information and stores into the database. In the implementation example, the module receives many sets of ticket options input by operators and sends to the airline and feedbacks information after inquiring price, selects a program and deposits into the database.

S10: Cicerone scheduling module receives the appropriate information and stores into the database. The module receives daily budget price and region information input by the operators, which is according to the region information extracts cicerones information from the database, then, select the list of suitable cicerones in accordance with daily price budget information. Operators inquire tour cicerones on the list about the price. The module receives the feedback information of the tour cicerones; operators select the cicerone information and store it into the database.

S11: Local reception arrangement module receives the appropriate information and stores into the database. The module receives daily budget price and region information input by the operators, which is according to the region information extracts reception information from the database, then choose the list of suitable reception in accordance with daily price budget information. Operators inquire reception on the list about the price. The module receives the feedback information of the reception; operators select the reception information and store it into the database.

S12: The hotel confirming module receives the reservation information and stores information into database. The module attains the hotel star-level requirements pre-input by clients in accordance with the requirements and regional searches hotel, and then receives the number of hotel rooms input by operator and sends to hotels and feedbacks information after inquiring price and stores into the database. Finally, the module receives the hotel selected by operator, hotel name and feedback number will be added to its database.

S13: The third-time order form generating and quoting module extracts the operational activities concrete information in the S8, the ticket information in the S9, the cicerone information in the S10, the reception information in the step S11 and the hotel reservation information in the S12. That information will be inserted into the basic order and quotation in the S5.

The above implementation example is provided to the general technical personnel in this field to use this invention, the general technical personnel in this field could make a variety of modification or changes to the above example under the invention idea, thus the scope of the invention is not be limited by the above implementation example, it should be in accordance with the most range of innovative features referred in the claims.

## Claims

1. A kind of business travel system based on network platform, which provides the access for clients and operators to insert into the network platform, design and manage one business travel program on this platform, at the same time, interact information each other, its characteristics is described as:
Database, for pre-stored data, at the same time, the module receives and stores data all the modules transmit;
Logging module, using to produce the user's account information, receiving the identification number and password input and determines legal in the use of some functions of the system, if it is legal login the network platform through the suitable access, otherwise prohibited login;
Client module, providing an entrance for clients to insert into the module so that the clients can design and manage the business travel program, the describing client modules further include:
The journey basic information input module receives basic schedule information input by clients and transmits to database to be stored;
The travel and inspection service activity module, clients input their own purposes of inspection business into the database and store;
Everyday scheduling input module receives the basic information of itinerary from the basic information of the itinerary in the database and provides clients for arranging everyday itinerary in the limit of the itinerary basic information and input the information store into the database;
Order form generating and quoting module includes the first-time order form generating and quoting module, the second-time order form generating and quoting module, the first-time order form generating and quoting module from the database to extract the basic information input module transfer to the itinerary basic information data of the database and pre-stored quotation data in the database, output the basic order and quotation of the first trip for clients view and store into the database, the second-time order form generating and quoting module from the database to extract the everyday scheduling input module transfer to the everyday itinerary arrangement information and pre-stored quotation data in the database and the basic order and quotation of the first-time trip generated by the second-time order form generating and quoting module, generates the basic order and quotation of the second trip;
Member list adding module receives the group members' information input by clients and store into the database;
Operator module, for operator access from the login module to the network platform to track and manage the entire business travel program, describing operator module further includes:
Airline Ticket confirming module, receiving ticket reservation and information and store into the database;
Hotel confirming module, receiving the booking information and store into the database;
Cicerone scheduling module, receiving the right guides information and store into the database;
Local reception arrangement module, to receive the reception right information and store into the database;
The third-time order form generating and quoting module, for extracting the service activities concrete information stored the adding module of service activities from the database, tickets information of airline ticket confirming module, hotel reservation information of the hotel confirming module, cicerone information of the cicerone scheduling module and reception information of the local reception arrangement module, and insert the information into the basic order and quotation generated by the second-time order form generating and quoting module.

2. According to the claim 1, business travel system based on network platform, its characteristics is described as the journey basic information input by clients includes: visit date, visit country, visitor number, visit days, set out place, hotel requirements, meal standard, traffic requirements, whether need trip approval, whether need trip visa, passport type, insurance type, the topic of visit the industry, respondents unit type, wishing to participate in the exhibition category, the number of invitation letters, the number of service activities as well as groups automatically generated code.

3. According to the claim 1, business travel system based on network platform, its characteristics is described as the operator module also includes everyday scheduling module, receive the number of days, country, city and attraction information, business events, conferences exhibitions provided by users, automatically the above-mentioned information will be displayed on the interface in the form of options for selection of operators.

4. According to the claim 2, business travel system based on network platform, its characteristics lie in everyday scheduling input by users in the everyday scheduling input module, including: daily arranged country, selected city from the country, selected trip spots form the city, the trip purpose and training needs and daily arrangements refers to the limit range of visiting country in the journey basic information by users.

5. According to claim 4, business travel system based on network platform, its characteristics lie in the information generated by the first-time order form generating and quoting, including the journey basic information, service activity information and quotation information, the journey basic information includes the travel name, the travel number the same as group number, the visit to the country, visitor number, visit time, visit days, set out place, traffic request, hotel request, meal standards and trip state, the service activities includes the visit information, the visit industry, the visit subject, the visit unit, the number of the invitation letters, the number of business activities, whether need the confirmation information to approve trip, whether need the confirmation information for visa trip, the quotation information includes hotel price, meal fee standard, guides fare, abroad comprehensive insurance, official activities fare, invitations costs; the information generated by the second-time order form generating and quoting module includes all information generated by the first-time order form generating and quoting module, the arrangement information for everyday added in the service activity information, the travel spots fee and reference total price in the quotation information, the everyday scheduling information includes the date, the city, daily arranged trip spot's names.

6. According to claim 1, business travel system based on network platform, its characteristics lie in the client module, including:
The client registration module, receiving registration information of the new client, client as a legitimate client through checking can access net work platform by logging modules;
Client modification module, when the order generated by the order form generating and quoting module is under unchecked, receiving the modification to the journey basic information of the journey basic information input module and the travel arrangement information of the everyday scheduling input module. The revised data will be deposited in the database.
The client booking module, using the system to provide clients the convenient quick inquiry to find the classic trip, a hot topic, convention exhibition, trips and reserved order, generating business inspection and tourism order, submitting to the background operator or directly to the services module, providing efficient and convenient services for clients.

7. According to claim 1, business travel system based on network platform, its characteristics lie in the operational activities concrete information received by the service activities adding module, including the country, city, date, speaker information, contacting information, whether need invitation letters, documents and concrete arrangements.

8. According to claim 1, business travel system based on network platform, its characteristics lie in airline ticket confirming module further includes:
Ticket reservation and inquiry module, receiving a few sets of ticket options of operator input, sending to the airline and feedback the price information after inquiring price;
Ticket management module, receiving one of the options selected by operators and stored in the database.

9. According to claim 1, business travel system based on network platform, its characteristics lie in hotel module further includes:
Hotel inquiry module, receiving the number of room inputted by operator and sending to the hotel and feedback the price information after inquiring price;
Hotel management module, receiving the hotels selected by operators and adding the hotel name and its feedback number to the database.

10. According to claim 1, business travel system based on network platform, its characteristics lie in the cicerone scheduling module further including:
Cicerone viewing module, receiving the budget price for every day input by operators;
Cicerone distributing module, receiving the region information input by operators, extracting a list of tour cicerones from the database according to the region information and daily budget price information, selecting a suitable list of guide and inquiring price with the guides on the list;
Cicerone confirming module, receives the feedback information from all cicerones and the information selected by operators, moreover, and storing information into the database.

11. According to claim 1, business travel system based on network platform, its characteristics lie in the local reception scheduling module further includes:
Local reception viewing module, receiving the daily budget price input by operators;
Local reception distributing module, receiving the region information input by operators, extracting a list of reception from the database according to the region information and daily budget price information, selecting a suitable list of reception, and inquiring price with the reception on the list;
Tour reception confirmation module, receiving the feedback information from all receptions, modifying the range of the receptions, adding the travel spots and receiving the information selected by operators, moreover, storing information into the database.

12. According to claim 1, business travel system based on network platform, its characteristics lie in the operator module further includes:
Work dairy filling module, receiving work dairy of the daily trip recorded by operators;
Journey approval generating module, receiving data input by operators in order to generate the approval travel;
Visa trip generating module, receiving data input by operators in order to generate the visa travel;
Journey ticket generating module, receiving ticket itinerary program input by operators and generating ticket itinerary;
Actual trip generating module, receiving the actual trip eventually arranged by operators and generating the actual travel;
Quotation list generating module, receiving the cost generated in the groups input by operators and generating travel quotations.

13. According to claim 1, business travel system based on network platform, its characteristics lie in the other cicerone module in the system using to consult cicerones and operators further includes:
Cicerone order and group inquiry module which inquires the order and travel group information that submitted by operators.
Opinion feedback module, receiving comments input by the tour cicerones and feedback information and storing into the database;
Cicerone guestbook module, receiving system information and reception messages and the best line provided by tour cicerones, through interacting with the cicerone scheduling module in the operator module and consult with operators.

14. According to claim 1, business travel system based on network platform, its characteristics lie in the other reception module in the system using to consult reception and operators further includes:
Tour reception order and group inquiry module, inquiring the order and travel group information submitted by operators.
Hotel information inquiry and modification module, inquiring the hotel information from the database, modifying hotel information and storing into the database to be updated;
Attraction information inquiry and modification module, inquiring, modifying and improve the newest attraction from the database and updating to the database; Line information inquiry and modification module, inquiring the local classic line Information from the database, modifying or adding classic lines, and storing to the database;
Local reception guestbook module, receiving system information and guides messages and through interacting with the cicerone scheduling module in the operator module consult with operators.

15. According to claim 1, business travel system based on network platform, its characteristics lie in the distributing monitor module further includes:
Group order distributing module, the super administrator set up by the system will distribute the group orders stored in the database to different common administrators;
Mission distributing module, the general administrators will distribute each mission of received group order to different operators set by the system, the operators operate the groups through the operator module;
Monitoring module, storing operational records of operators and providing all the information for the super administrator controlling all the documents undertaking or have groups.
